# EUROPÄISCHE PATENTSCHRIFT

(11) **EP 2 512 621 B1**
(45) Veröffentlichungstag und Bekanntmachung des Hinweises auf die Patenterteilung: **12.07.2017**
(21) Anmeldenummer: 10781615.9
(22) Anmeldetag: 13.11.2010
(51) Int. Cl.: B01D 50/00, B01D 53/50, B01D 53/75, C10J 3/84

(54) **VERFAHREN ZUR ABSCHEIDUNG VON SAUREN KOMPONENTEN, STAUB UND TEER AUS HEISSEN GASEN VON VERGASUNGSANLAGEN**
METHOD FOR SEPARATING ACID COMPONENTS, DUST AND TAR FROM HOT GASES OF GASIFICATION INSTALLATIONS
PROCÉDÉ POUR SÉPARER DE GAZ CHAUDS D'INSTALLATIONS DE GAZÉIFICATION LES COMPOSANTS ACIDES, LES POUSSIÈRES ET LE GOUDRON

(30) Priorität: 16.12.2009 DE 102009058656
(43) Veröffentlichungstag der Anmeldung: 24.10.2012
(60) Teilanmeldung: 13154396.9
(73) Patentinhaber: ThyssenKrupp Industrial Solutions AG, 45143 Essen (DE)
(72) Erfinder: PAVONE, Domenico, 44797 Bochum (DE); ABRAHAM, Ralf, 59192 Bergkamen (DE)
(74) Vertreter: Kutzenberger Wolff & Partner
(86) Internationale Anmeldenummer: PCT/EP2010/006922
(87) Internationale Veröffentlichungsnummer: WO 2011/082729

(56) Entgegenhaltungen:
- EP-A2- 1 870 444
- WO-A2-2008/055591
- DE-A1- 2 622 938
- DE-A1-102006 017 353
- FR-A1- 2 515 061
- JP-A- 2000 303 078

## Beschreibung

Bei der Vergasung fossiler Brennstoffe, wie beispielsweise Stein- oder Braunkohle, Biomassen, Raffinerierückständen reagiert das enthaltene Chlor oder Schwefel zu sauren Gasen, was zu erosiven oder korrosiven Problemen bei den nachgeschalteten Anlagekomponenten führt. Bei der Vergasung von Biomassen fallen zudem noch beträchtliche Mengen an Teeren an, die es zu entfernen gilt, da die Teerkondensate ebenfalls in nachgeschalteten Anlagen zu erheblichen Problemen führen können. Aus der EP 1 870 444 A2 ist ein Reinigungsverfahren von Gasen aus einem Holzvergaser bekannt, das Filterkerzen einsetzt und dem Produktgas mehr Zeit für chemische Reaktionen vor den Filterkerzen lässt. Eine Zyklonabscheidung ist dort nicht vorgesehen.

Ein Verfahren zur Abscheidung von sauren Komponenten und Staub aus einem heißen Gas einer Vergasungsanlage wird in der DE 10 2006 017 353 A1 offenbart. Zur Entfernung schwefelhaltiger Gaskomponenten werden den Einsatzstoffen Additive beigefügt. In einem weiteren Schritt erfolgt eine Abscheidung von Staubanteilen. Hierzu werden Zyklone sowie Filter eingesetzt.

Eine mögliche Abscheidung von sauren Schadgasen kann auch dadurch erfolgen, dass nasse Waschverfahren eingesetzt werden, was aber den Nachteil hat, dass die Gase stark abgekühlt werden müssen. Eine Teerabscheidung wird als sogenannte katalytische Abscheidung in separaten katalytischen Teerabscheidern durchgeführt, wobei ein derartiger Apparat in der Regel der H₂S-Abscheidung und der Entstaubung nachgeschaltet ist. Wird ein entsprechender Katalysator dem Filter vorgeschaltet, so ist es notwendig, dass das Synthesegas aufgrund der Wärmeverluste wieder auf die Betriebstemperatur zwischen 800°C und 1000°C aufgeheizt werden muss, was zu hohen Wirkungsgradverlusten und zu einem entsprechend hohen technischen Aufwand führt.

Aufgabe der Erfindung ist es, ein wirtschaftliches Verfahren mit einer entsprechenden Anlage zu schaffen, die eine sichere Abtrennung von sauren Verbindungen HF, HCl, H₂S, Staub und Teer in einem möglichst hohen Temperaturbereich ermöglicht. Diese Aufgabe wird durch ein Verfahren mit den Merkmalen des Patentanspruchs 1 gelöst.

Mit der Erfindung wird erreicht, dass durch die kombinierte Abscheidung der Feststoffe in einem gemeinsamen Apparat bei hoher Temperatur geringere Wärmeverluste zu erreichen sind, wobei gleichzeitig die Additivzugabe je nach Verfahrensweise an unterschiedlichen Positionen erfolgen kann:
Die Zugabe von Additiven kann entweder gleichzeitig mit dem Brennstoff oder im Vergaserbereich oder mit rezirkuliertem Quenchgas, wie dies beispielsweise in der DE 10 2008 049 579 der Anmelderin beschrieben ist, erfolgen, wobei grundsätzlich auch die Möglichkeit besteht, die Additive insbesondere vor der Entstaubung je nach Verfahrensablauf zuzuführen.

In Ausgestaltung ist nach der Erfindung vorgesehen, dass eine Separierung von sauren Gaskomponenten, z.B. eine H₂S-Abscheidung, vor der Entstaubung durch Additivzugabe vorgenommen wird.

Eine weitere Ausgestaltung der Erfindung besteht darin, dass eine Teerabscheidung durch Zugabe von Additiven vor der Entstaubung vorgenommen wird oder dass eine Restteerabscheidung an und/oder innerhalb der Kerzenfilter vorgenommen wird.

Beschrieben wird auch eine Anlage zur Abscheidung von sauren Komponenten, Staub und Teer aus heißen Abgasen von Vergasungsanlagen, die sich dadurch auszeichnet, dass ein Zyklonabscheider und ein Kerzenfilter innerhalb eines Gefäßes in Schwerkraftrichtung übereinander vorgesehen sind, wobei das Zentralrohr des Zyklonabscheiders in den mit Filterkerzen bestückten Filterraum geführt ist.

Die Zuordnung des Zyklonabscheiders und der Kerzenfilter innerhalb eines Gerätes mit der erfindungsgemäßen Positionierung führt zu geringen Strömungsverlusten bei gleichzeitig hoher Effizienz.

An dieser Stelle sei bemerkt, dass für sich gesehen Kombinationsgeräte aus Filter und Zyklon bekannt sind, z.B. aus dem deutschen Gebrauchsmuster 1 879 283, wobei dort besonders auf die Feinstaubaustragung keine Rücksicht genommen wird. Kleinbauende Filter entsprechender Bauweise zeigen auch die DE 26 22 938 B, DE 32 30 709 A oder DE 34 22 592 A, um nur einige Beispiele zu nennen. Abgewandelte Ausgestaltungen zeigen die US 2 941 621 oder die WO 83/03556. Kombinationsgeräte aus Filter und Zyklon sind ferner aus der JP 2000 303 078 A und der FR 2 515 061 A1 bekannt.

Eine etwas abgewandelte Ausführungsform einer entsprechenden Anlage besteht darin, dass auf Abstand zum Zentralrohr im Filteraum ein Schrägboden vorgesehen ist mit einem seitlichen Abzug für den Feinstaub und einem exzentrischen Durchlass für das Zentralrohr durchströmende Gas.

Unabhängig von der Apparatgestaltung können die Filterkerzen mit einer katalytischen Beschichtung und/oder einer katalytischen Füllung ausgerüstet sein.

Weitere Merkmale, Einzelheiten und Vorteile der Erfindung ergeben sich aufgrund der nachfolgenden Beschreibung sowie anhand der Zeichnung, diese zeigt in
- Fig. 1: ein Prinzipschaltbild einer Anlage zur Durchführung des erfindungsgemäßen Verfahrens,
- Fig. 2: in vereinfachter Schnittdarstellung eine nicht erfindungsgemäße Apparateausführung zur Erläuterung des technischen Hintergrunds,
- Fig. 3: eine leicht vergrößerte Teilaufsicht auf das Zentralrohr gemäß Pfeil III in Fig. 2 sowie in
- Fig. 4: eine Apparateausführung zur Durchführung eines Ausführungsbeispiels der Erfindung.

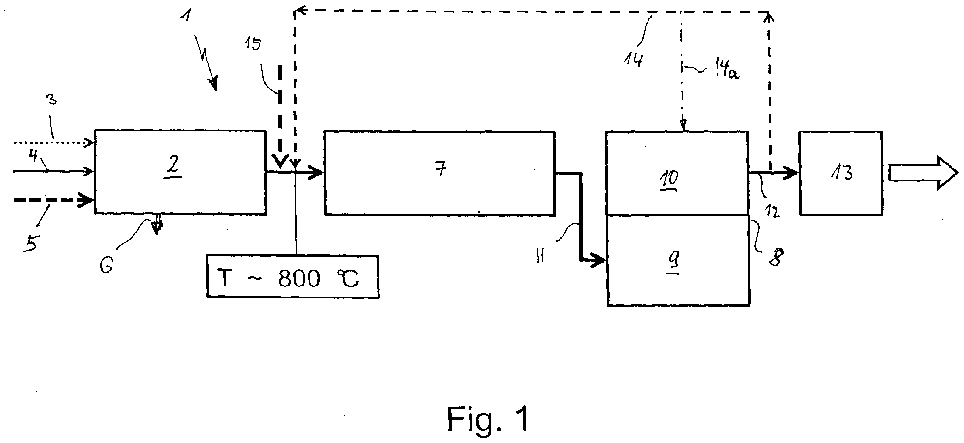

Die in Fig. 1 allgemein mit 1 bezeichnete Anlage ist dort als Prinzipschaltbild dargestellt. Dabei werden dort einem Vergaser 2 Brennstoff (punktierter Pfeil 3), Sauerstoff (durchgezogener Pfeil 4) und ggf. Additive (gestrichelter Pfeil 5) zugeführt. Der Schlackeabzug ist mit 6 bezeichnet. Dem Vergaser 2 folgt eine Entschwefelung 7 und nachfolgend der Apparat 8, in dem ein Zyklon 9 und ein Kerzenfilterbereich 10 zusammengefasst sind. Die Gaszufuhr in den Zyklon 9 ist mit einem Pfeil 11 bezeichnet, der Nutzgasauslass hinter dem Kerzenfilter 10 mit einem Pfeil 12. Das Nutzgas, allgemein mit 13 bezeichnet, wird dann einer weiteren Verarbeitung zugeführt.

Eine Quenchgasrückführung aus dem Strom 12 in einem Bereich vor der Entschwefelung 7 ist mit einem gestrichelten Pfeil 14 wiedergegeben. In diesem Bereich vor der Entschwefelung kann auch ein Additiv zugeführt werden, was mit einem gestrichelten Pfeil 15 angedeutet ist.

Erkennbar kann beispielsweise die Abscheidung saurer Gaskomponenten, z.B. eine H₂S-Abscheidung vor der Entstaubung mittels Additivzugabe (Vergaser und/oder mit Quenchgas) erfolgen. Eine Teerabscheidung vor der Entstaubung durch Additive ist ebenfalls möglich, wobei die Vorababscheidung dieser Additive und des Staubes im Zyklon und eine Feinstaubabscheidung im Kerzenfilter erfolgt.

Möglich ist auch die Restabscheidung der Teere an und/oder innerhalb der Kerzenfilter, wobei den Kerzenfiltern am Austritt ein Sicherheitsfilter, z.B. aus Schaumkeramik, nachgeschaltet sein kann. Diese Sicherheitsfilter können auch katalytisch aktiv sein. Das Quenchgas, beispielsweise angedeutet durch einen Teilstrom 14a, kann zur Abreinigung der Filterkerzen verwendet werden, wie nachfolgend noch dargestellt.

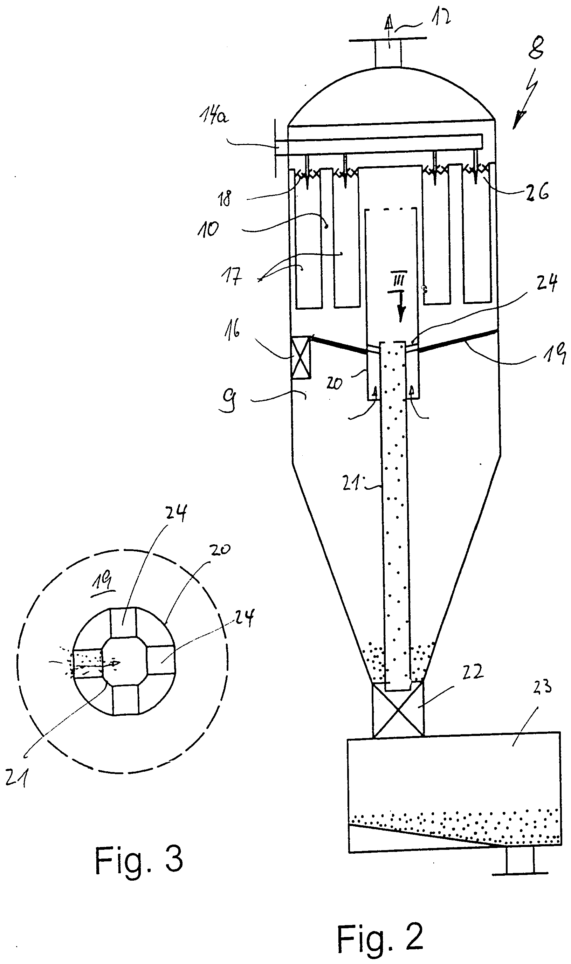

In Fig. 2 ist vereinfacht ein nicht erfindungsgemäßer Apparat 8 im Schnitt dargestellt, der aus einer Kombination des Zyklons 9 mit dem Kerzenfilter 10 gebildet ist. Dem Zyklon 9 werden über einen Zykloneintritt 16 die mit Partikeln beladenen Gase zugeführt, wobei aufgrund der unterschiedlichen Druckverhältnisse die Mehrzahl der Partikel nach unten abgesetzt wird. Die so vorgereinigten Gase strömen im Zentralrohr des Zyklonabscheiders 9 nach oben in den Kerzenfilterbereich 10 und werden mittels der mit 17 bezeichneten Kerzenfilter abgereinigt. Das so gereinigte Gas durchströmt noch am Kopf der Kerzenfilter befindliche Sicherheitsfilter, mit 18 bezeichnet, um dann gemäß Pfeil 12 den Apparat 8 zu verlassen.

Werden die Kerzenfilter z.B. mittels rückgeführten Quenchgases über die Leitung 14a abgereinigt, fällt der an den Filter haftende Staub auf den schräg nach unten geneigten Trennboden 19 zwischen Zyklon 9 und Kerzenfilterbereich 10, wobei das Zentralrohr 20 des Zyklons einen inneren Einbau im Bodenbereich 19 aufweist, der in Fig. 3 etwas vergrößert dargestellt ist.

Speichenangeordnete Feinstaubaustragsrohre 24 führen vom Boden 19 in das zentrische Abführrohr 21, welches den Zyklon 9 durchsetzt und unten in einem Staubaustrag 22 endet, wobei dort über entsprechende Schleusen der Staub einem Staubsammler 23 zugeführt wird.

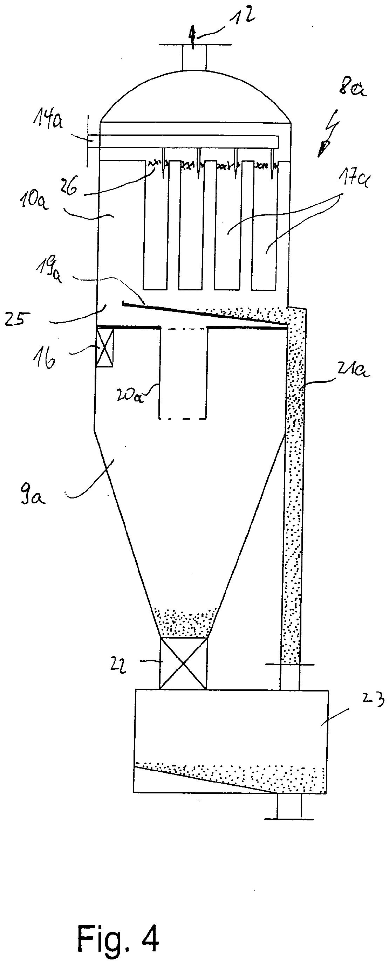

In Fig. 4 ist ein erfindungsgemäßes Ausführungsbeispiel dargestellt. Hier ist das Austragsrohr 21a für den Feinstaub aus dem Filterkerzenbereich 10a des Apparates 8a seitlich angeordnet, wobei unterhalb der Filterkerzen 17a in diesem Beispiel eine exzentrische, schräge Bodenplatte 19a vorgesehen ist, auf die beim Abreinigen der Filterkerzen 17a der Feinstaub fällt und seitlich ausgeleitet wird. Das Gas, welches das Zentralrohr 20a des Zyklons 9a durchströmt, wird über einen exzentrisch angeordneten Durchlass 25 den Filterkerzen 17a zugeführt. Die Filterkerzen 17a sind ebenso wie die Filterkerzen 17 (Fig. 1) in ihrem stromabwärtigen Endbereich mit katalytisch aktiven Sicherheitsfiltern 26 ausgerüstet. Ansonsten sind die funktionsmäßig gleichen Elemente beim Ausführungsbeispiel der Fig. 4 mit den gleichen Bezugszeichen versehen wie in Fig. 2.

Natürlich ist das beschriebene Ausführungsbeispiel der Erfindung noch in vielfacher Hinsicht abzuändern, ohne den Grundgedanken zu verlassen, so stellen die Fig. 4 lediglich stark vereinfacht den Apparat 8a dar, welcher für die Erfindung wesentlich als Kombiabscheider gestaltet sind.

## Patentansprüche

1. Verfahren zur Abscheidung von sauren Komponenten, Staub und Teer aus heißen Gasen von Vergasungsanlagen,
wobei aus einem Vergaser (2) austretende, über 700°C heiße Gase mit Additiven einer Entschwefelung (7) zugeführt werden,
**dadurch gekennzeichnet,**
**dass** die Gase nachfolgend einem Apparat (8a) zugeführt werden, in welchem ein Zyklon (9a) und ein Kerzenfilterbereich (10a) in einem gemeinsamen Gefäß zusammengefasst sind,
wobei in dem Zyklon (9a) vorgereinigte Gase durch ein Zentralrohr (20a) des Zyklons (9a) nach oben in den Kerzenfilterbereich (10a) strömen, mittels in dem Kerzenfilterbereich (10a) angeordneter Kerzenfilter (17a) gereinigt und zur weiteren Nutzung hinter den Filterkerzen (17a) abgezogen werden,
wobei die Kerzenfilter (17a) mittels rückgeführten Quenchgas gereinigt werden, an den Kerzenfiltern (17a) anhaftender Staub auf einen unterhalb der Kerzenfilter (17a) vorgesehenen, exzentrischen Schrägboden (19a) fällt und über ein seitlich des Apparates (8a) angeordnetes Austragsrohr (21 a) für den Staub aus dem Kerzenfilterbereich (10a) seitlich ausgeleitet wird,
wobei das Gas, welches das Zentralrohr (20a) des Zyklons (9a) durchströmt, über einen exzentrisch angeordneten Durchlass (25) des Schrägbodens (19a) den Kerzenfiltern (17a) zugeführt wird.

2. Verfahren nach Anspruch 1,
**dadurch gekennzeichnet,**
**dass** eine Separierung von sauren Gaskomponenten, z.B. eine H₂S- Abscheidung, vor der Entstaubung durch Additivzugabe vorgenommen wird.

3. Verfahren nach Anspruch 1 oder 2,
**dadurch gekennzeichnet,**
**dass** eine Teerabscheidung durch Zugabe von Additiven vor der Entstaubung vorgenommen wird.

4. Verfahren nach einem der vorangehenden Ansprüche,
**dadurch gekennzeichnet,**
**dass** eine Restteerabscheidung an und/oder innerhalb der Kerzenfilter vorgenommen wird.

## Claims

1. Method for separating off acidic components, dust and tar from hot gases of combustion plants,
wherein hot gases emerging at over 700°C from a gasifier (2) have additives for desulphurisation (7) fed into them,
**characterized**
**in that** the gases are subsequently fed to an apparatus (8a) in which a cyclone (9a) and a candle filter region (10a) are combined in a common vessel,
wherein gases pre-purified in the cyclone (9a) flow upwards through a central pipe (20a) of the cyclone (9a) into the candle filter region (10a), are purified by means of the candle filters (17a) arranged in the candle filter region (10a), and are drawn off downstream of the filter cartridges (17a) for further use,
wherein the candle filters (17a) are cleaned by means of recirculated quenching gas, dust adhering to the candle filters (17a) falls onto an eccentric oblique base (19a) provided underneath the candle filters (17a), and said dust is discharged laterally from the candle filter region (10a) via a discharge pipe (21a) for the dust, which discharge pipe is arranged laterally with respect to the apparatus (8a),
wherein the gas which flows through the central pipe (20a) of the cyclone (9a) is fed to the candle filters (17a) via an eccentrically arranged passage (25) of the oblique base (19a).

2. Method according to Claim 1,
**characterized**
**in that** a separation of acidic gas components, for example a process of separating off H₂S, is performed by addition of additives before the dust removal.

3. Method according to Claim 1 or 2,
**characterized**
**in that** a process of separating off tar is performed by addition of additives before the dust removal.

4. Method according to one of the preceding claims,
**characterized**
**in that** a process of separating off residual tar is performed at and/or within the candle filters.

## Revendications

1. Procédé pour séparer des composants acides, les poussières et le goudron hors de gaz chauds d'installations de gazéification,
dans lequel on envoie à une désulfuration (7) avec des additifs des gaz chauds sortant à plus de 700°C d'un gazéificateur (2),
**caractérisé en ce que** l'on envoie ensuite les gaz à un appareil (8a), dans lequel un cyclone (9a) et une zone de filtres à bougies (10a) sont regroupés dans une enceinte commune,
dans lequel des gaz pré-épurés dans le cyclone (9a) s'écoulent à travers un tube central (20a) du cyclone (9a) vers le haut dans la zone de filtres à bougies (10a), sont épurés au moyen de filtres à bougies (17a) disposés dans la zone de filtres à bougies (10a) et sont soutirés après les bougies de filtre (17a) en vue d'une autre utilisation,
dans lequel les filtres à bougies (17a) sont nettoyés au moyen d'un gaz de refroidissement refoulé, les poussières adhérant sur les filtres à bougies (17a) tombent sur un fond incliné excentrique (19a) prévu en dessous des filtres à bougies (17a) et sont évacuées latéralement hors de la zone de filtres à bougies (10a) au moyen d'un tube d'extraction (21a) pour les poussières disposé latéralement à l'appareil (8a),
dans lequel le gaz, qui traverse le tube central (20a) du cyclone (9a), est envoyé aux filtres à bougies (17a) par une sortie (25) du fond incliné (19a) disposée de façon excentrique.

2. Procédé selon la revendication 1, **caractérisé en ce que** l'on opère une séparation de composants gazeux acides, par exemple une séparation de H₂S, par un ajout d'additifs avant le dépoussiérage.

3. Procédé selon la revendication 1 ou 2, **caractérisé en ce que** l'on opère une séparation du goudron par ajout d'additifs avant le dépoussiérage.

4. Procédé selon l'une quelconque des revendications précédentes, **caractérisé en ce que** l'on opère une séparation du goudron résiduel sur et/ou à l'intérieur des filtres à bougies.
